# EUROPEAN PATENT APPLICATION

(11) **EP 0 707 398 A1**
(43) Date of publication of application: **17.04.1996**
(21) Application number: 95202574.0
(22) Date of filing: 25.09.1995
(51) Int. Cl.: H04L 12/56, H04Q 11/04, H04J 3/06

(54) **Buffer reading control unit for ATM receiver**

(30) Priority: 14.10.1994 NL 9401696
(71) Applicant: Koninklijke PTT Nederland N.V., NL-2509 CH The Hague (NL)
(72) Inventor: Tan, Han Hiong, NL-2651 VD Berkel Rodenrijs (NL)

(57) **Abstract**

In order to prevent the filling level of the buffer of an ATM receiver becoming too low or too high, the buffer is read under the control of a first or a second clock oscillator via a changeover switch. The clock oscillators generate clock signals of different frequency. The changeover switch is controlled by a filling level signal. Below a certain filling level, the changeover switch connects the read gate of the buffer to the clock oscillator which has the lowest clock frequency, and above this to the clock oscillator which has the highest clock frequency. The two oscillators can be used jointly by all the ATM receivers within a "curb".

## Description

### A. BACKGROUND OF THE INVENTION

The invention relates to an ATM receiver and, in particular, to the reading control of the cell buffer.

In an ATM transmission system, it is possible for source signals to be transmitted, via different virtual channels, at different bit rates, as a result of which the number of ATM cells per unit of time, the cell rate, in one virtual channel can differ from that in another channel. Subsystems which, for example, are exclusively designed for the transmission of speech, are often assigned one specific nominal cell rate, however.

Where the cells arrive at a receiver, said cells, after having been accommodated in a buffer, must be read therefrom at a clock frequency whose nominal value matches the nominal cell rate assigned to that subsystem. This does mean, however, that the variations in cell rate which occur in practice, have to be taken into account. By means of the clock frequency being made to match said cell rate variations in the cell stream presented, the buffer can be kept to a limited size.

It is known to use, as the clock generator for reading such a buffer, a PLL circuit which is driven from the buffer by a control signal which is representative for the filling level of the buffer. The drawback of that solution for use in ATM receivers - in particular receivers which are intended for "low budget" subscriber applications such as for the transmission of speech - is that said PLL circuits cannot be used jointly by more than one receiver buffers (no "sharing") and, partly as a result of this, are expensive. The invention proposes a less expensive solution.

### B. SUMMARY OF THE INVENTION

The invention proposes the use of two clock oscillators which are to be used jointly and of which, depending on the value of the filling level control signal, either one them is connected to said reading control gate of the buffer. The oscillators have different frequencies, and switching can be effected between the oscillators by means of a switching element which is controlled by the said control signal. The oscillator frequencies correspond to the minimum and maximum cell rates occurring in practice, expressed in bit rates.

The invention will be explained in more detail hereinafter with reference to an illustrative embodiment.

### C. ILLUSTRATIVE EMBODIMENTS

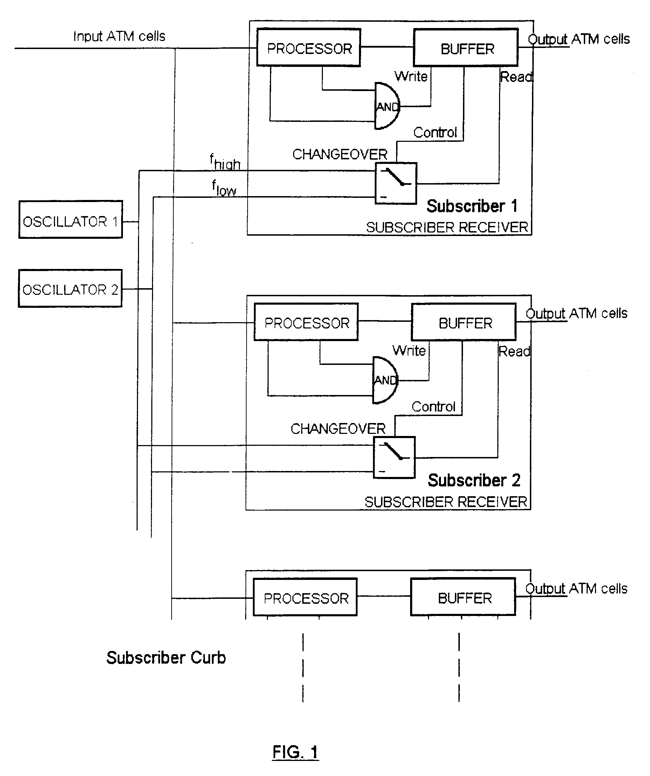

Figure 1 shows an illustrative embodiment of the invention. The figure agrees in part with an illustration in a previous patent application by Applicant; to the extent that it is relevant, the content of that application, having the number NL 9401525, is considered to have been incorporated in the present application.

ATM cells which - via a "curb" - are supplied to subscribers (the curb for example comprises 16 or 32 subscriber receivers) have their headers read by a processor. Only those cells which - according to an address incorporated in the header - are destined for a particular subscriber are passed on to a downstream buffer in the receiver of that subscriber. The clock frequency at which the cell bits are presented to the processor is 155.52 MHz; the bit rate therefore is 155.52 Mb/s. The process of the cells destined for the subscriber being passed on to the buffer takes place by means of an AND gate which is driven, on the one hand, by the system clock and, on the other hand, by a cell enable signal. If a cell is destined for the subscriber, the processor generates the cell enable signal during the cell time. During that time, the buffer is therefore supplied with a write signal with a clock frequency of 155.52 Mhz [sic]. The average (nominal) bit rate of the cells destined for the subscriber is considerably lower, for example 64 Kb/s. In the present case, it is assumed that this rate of 64 Kb/s is fixed and need not, as in the abovementioned application, be derived from the cell stream presented. The frequency at which the buffer has to be read should in that case therefore also be 64 kHz. The bit rate may be subject to a certain variation, owing to frequency variation of the source clock. In order to ensure that the buffer is not being read too quickly or too slowly over a certain time, the buffer is read under the control of a first or a second clock oscillator. The frequencies of these differ. The presentation of the first or second clock signal, as a write signal, to the buffer takes place via a switch-over element which is controlled by a control signal which is emitted by the buffer and which is a measure for the filling level. The switch-over element comprises a threshold setting. Oscillator 1 has a (slightly) lower frequency than oscillator 2. Below the filling level threshold, the buffer is read under the control of oscillator 1, which will cause the filling level to rise; Above [sic] the filling level threshold the buffer is read under the control of oscillator 2, which will cause the filling level to drop. The oscillators can be used jointly by all subscriber receivers within the curb.

### D. REFERENCE

Dutch Patent Application NL 9401525 in the name of Applicant.

## Claims

1. ATM receiver, comprising a buffer to which the bits of ATM cells destined for that receiver are written, characterized in that said bits are read from said buffer under the control of a first clock oscillator which has a relatively low frequency or a second clock oscillator which has a relatively high frequency, said two clock oscillators being connected, via a changeover element, to a read control gate of the buffer, said changeover element being controlled in such a way by a buffer filling level signal that for a relatively low filling level of the buffer, the read control gate is connected to the first clock oscillator which has a relatively low frequency, and for a relatively high filling level it is connected to the second clock oscillator which has a relatively high frequency.
